# EUROPÄISCHE PATENTANMELDUNG

(11) **EP 1 530 999 A1**
(43) Veröffentlichungstag der Anmeldung: **18.05.2005**
(21) Anmeldenummer: 04105517.9
(22) Anmeldetag: 04.11.2004
(51) Int. Cl.: B01J 29/04, B01J 29/50, B01J 23/42, C10G 45/64

(54) **Metallhaltiger Katalysator**

(30) Priorität: 17.11.2003 DE 10353726
(71) Anmelder: Carl von Ossietzky Universität Oldenburg, 26111 Oldenburg (DE)
(72) Erfinder: Rössner, Frank, 26131, Oldenburg (DE); Kuhlmann, Arne, 26180, Rastede-Hahn (DE); Schwieger, Wilhelm, 91080, Spardorf (DE)
(74) Vertreter: Taruttis, Stefan, Dr.

(57) **Zusammenfassung**

Erfindungsgemäß ist vorgesehen, dass ein Komposit-Katalysator zur Umsetzung von Kohlenwasserstoffen verwendet wird, der ein metallhaltiges Schichtsilikat in Mischung mit einem sauren SiO₂-Festkörper, beispielsweise H-Erionit enthält. Durch thermische Verkapselung wird eine Beständigkeit gegen Katalysatorgifte erzielt.

Die erfindungsgemäßen Komposit-Katalysatoren werden besonders bevorzugt für die Umwandlung von Kohlenwasserstoffen eingesetzt, um längerkettige Paraffine und/oder Olefine zu kürzerkettigen, wahlweise gesättigten Kohlenwasserstoffen umzusetzen.

## Beschreibung

Die vorliegende Erfindung betrifft Katalysatoren zur bifunktionellen Katalyse, insbesondere metallhaltige Silikat-Katalysatoren in Mischung mit Komponenten, die saure Zentren aufweisen, und deren Verwendung bei der Hydroisomerisierung, beim Hydrocracken oder bei der Hydroraffination.

### Stand der Technik

Aus den *Studies in Surface Science and Catalysis,* F. Rößner et al., 94, , S. 472 (1995) "Spillover Assisted Catalytic effects on Zeolites" , ist die Umsetzung von n-Hexan am Zeolith H-Erionit in Gegenwart von Wasserstoff bei erhöhter Temperatur zu C₃-, n-C₄- und n-C₅ - Kohlenwasserstoffen bekannt. In Anwesenheit von Platin als Pt/H-Erionit zeigt der Katalysator eine geringere Aktivität und die Selektivität wird zu iso-Hexanen verschoben, die vorzugsweise auf der äußeren Zeolithoberfläche gebildet werden. Es wird angenommen, dass die Bildung von iso-Alkanen durch am Metall aktivierten Wasserstoff, der über die Zeolithoberfläche zu einem sauren Zentrum diffundiert, hervorgerufen wird. Die Platinhaltige Form des Erionits wurde durch dreimaligen Ionentausch von Na,K-Erionit in NH₄NO₃-Lösung, anschließendes Imprägnieren mit wässriger H₂PtCl₆-Lösung sowie sukzessive Aktivierung (*in situ*) im Luft-, Stickstoff- und Wasserstoffstrom bei jeweils 400 °C für jeweils 3 Stunden hergestellt. Die Funktionsweise des Katalysators wird durch einen Spillovereffekt erklärt, bei dem molekularer Wasserstoff zunächst am Platin aktiviert wird und anschließend an die zur Verfügung stehenden sauren Reaktionszentren des Zeolithen Erionit per Oberflächendiffusion übertragen wird.

Weiterhin offenbaren F. Rößner et al. in "Investigations on Hydrogen Spillover", *J*. *Chem. Soc. Faraday Trans.,* 1539-1545 (1995), dass der Zeolith Erionit zur bifunktionellen Katalyse von Kohlenwasserstoffen geeignet ist, insbesondere zur Dehydrierung / Hydrierung von Kohlenwasserstoffen, sowie zu deren Isomerisierung. Der verwendete Katalysator war ein Na,K-Erionit, der in wässriger NH₄NO₃-Lösung in die H-Form überführt wurde. Als eine räumlich getrennte Katalysatorphase wurde Pt/Al₂O₃ verwendet, wobei das geträgerte Platin zur gesteuerten Aktivierung des H-Erionits mit diesem in Kontakt gebracht und nach erfolgtem Spillover des aktivierten Wasserstoffes von diesem entfernt werden konnte.

Die DE 44 05 876 A1 beschreibt Katalysatoren bzw. Formkörper aus Katalysatoren auf der Basis von Schichtsilikaten, die eine erhöhte Abriebfestigkeit und bessere chemische bzw. thermische Beständigkeit zeigen sollen. Dieses wird durch Behandeln des säureaktivierten Schichtsilkats mit einem Bindemittel erreicht, das dessen Teilchen miteinander verbindet. Als Bindemittel wird eine Vielzahl anorganischer, metallorganischer oder organischer Bindemittel erwähnt, darunter auch durch oberflächliche Silanisierung des Schichtsilikats.

Die DE 199 54 76 A1 betrifft Mikrokapseln, die aus einem Kapselmaterial bestehen und einem davon unabhängigen eingekapselten Festkörper. Das Kapselmaterial besteht aus einem Silikonpolymer. Der Festkörper dient als Absorbenz, und kann beispielsweise ein Zeolith oder Schichtsilikat sein. Eine Eignung als Katalysator wird nicht beschrieben.

Die DD 256 513 A1 offenbart einen bestimmten metallhaltigen Zeolith-Katalysator zur Umsetzung von Ethan für die Erzeugung von Aromaten.

Es ist auch bekannt, Katalysatoren durch Herstellung von Metallclustem in nanostrukturierten Hohlräumen zu verbessern (*Studies Surface Science and Catalysis* 69 (1991) 65, *Catalysis* *Letters* (1990), jedoch bisher ohne großen Erfolg darin, einen für die technische Anwendung geeigneten Katalysator bereitzustellen.

Auch die Überschichtung eines auf einen Siliziumeinkristall aufgedampften Pt-Clusters mit SiO₂ (Nature 329 (1987), 531) ist auf die Durchführung der Hydrierung von Ethen im Hochvakuum beschränkt.

Ein Nachteil der bekannten Metallträger-Katalysatoren besteht darin, dass die Metalle auf solchen oxidischen Trägern eine sehr breit gestreute Verteilung der Kristallitgrößen aufweisen, wodurch unterschiedliche katalytische Aktivitäten hervorgerufen werden. Bekannte Katalysatoren unterliegen bei chemischen Reaktionen der Vergiftung, d.h. Desaktivierung der metallischen Komponente durch beispielsweise CO oder schwefelhaltige Verbindungen. Diese Desaktivierung beeinflußt die Aktivität und Selektivität des Katalysators.

### Aufgabe der Erfindung

Ein wesentliches Einsatzgebiet für metallhaltige Katalysatoren auf Basis von Zeolithen ist die Hydrierung, Hydroraffination und/oder Isomerisierung ungesättigter Kohlenwasserstoffe zu gesättigten Kohlenwasserstoffen, die beispielsweise als Benzinfraktion geeignet sind. Denn bei der industriellen Herstellung von Benzin ist es erforderlich, einerseits den Anteil ungesättigter Verbindungen, wie beispielsweise Benzol, zu verringern, andererseits eine hohe Klopffestigkeit der Kohlenwasserstoffmischung zu erreichen.

Angesichts der großen Bedeutung metallhaltiger Zeolithkatalysatoren für Hydrierungs-, Hydroraffmations- und/oder Isomerisierungsreaktionen, beispielsweise bei der Erzeugung klopffesten Benzins mit einem geringen Anteil ungesättigter Kohlenwasserstoffe, stellt sich der vorliegenden Erfindung die Aufgabe, einen alternativen Katalysator bereitzustellen.

Insbesondere ist es eine Aufgabe der vorliegenden Erfindung, ein Katalysatorsystem für Umwandlungsreaktionen von Kohlenwasserstoffen bereitzustellen, die nicht der Desaktivierung durch typische Katalysatorgifte, wie beispielsweise CO, schwefel-, stickstoffoder sauerstoffhaltige organische Verbindungen sowie ungesättigte Nebenprodukte von Umwandlungsreaktionen von Kohlenwasserstoffen unterliegen oder durch diese blockiert werden.

Eine weitere Aufgabe der vorliegenden Erfindung liegt darin, ein Verfahren zur Herstellung von Benzin mit hoher Klopffestigkeit bereits aus einem Kohlenwasserstoffgemisch mit einem Anteil ungesättigter Verbindungen, beispielsweise Benzol, bereitzustellen., das den Einsatz metallhaltiger Zeolithkatalysatoren vermeidet. Eine weitere Aufgabe der Erfindung liegt darin, ein solches Verfahren zur Herstellung von klopffestem Benzin bereitzustellen, bei dem der eingesetzte Katalysator nur in geringem Maße der Vergiftung unterliegt.

### Allgemeine Beschreibung der Erfindung

Die erfindungsgemäßen Katalysatoren und Verfahren zur Umsetzung von Kohlenwasserstoffen, in denen diese Katalysatoren eingesetzt werden, lösen diese Aufgabe.

Der erfindungsgemäße Katalysator ist ein Komposit-Katalysator, der als metallhaltige Silikatkomponente einen Anteil eines metallhaltigen Schichtsilikats in funktioneller Mischung mit einem sauren Katalysatorbestandteil auf Basis eines Feststoffs mit sauren Zentren aufweist.

Erfmdungsgemäß ist vorgesehen, dass die metallhaltige Silikatkomponente des Komposit-Katalysators auf einem Schichtsilikat basiert, der nach Einbringung des metallischen Bestandteils einer Erwärmung unterworfen worden ist.

Überraschenderweise ist gefunden worden, dass eine bei der Herstellung eines metallhaltigen Katalysators auf Basis eines Schichtsilikats auftretende Erwärmung zur Veränderung der Schichtstruktur führt, was in der Folge dazu führt, dass zwar die Reaktivität dieses Katalysatorbestandteils erhalten bleibt, andererseits jedoch die Zugänglichkeit des metallischen Bestandteils für sogenannte Katalysatorgifte, beispielsweise schwefelhaltige Verbindungen, vermindert wird. Die erfindungsgemäße Kombination einer solchen metallhaltigen Silikatkomponente eines Komposit-Katalysators auf Basis eines Schichtsilikats, das nach Einbringung des Metalls einer Erwärmung unterworfen worden ist, mit einem sauren Katalysatorbestandteil auf Basis eines Feststoffs mit sauren Zentren, beispielsweise Zeolith in überwiegend H-Form, eignet sich in besonderem Maße für die Hydrierung, Hydroraffmation und/oder Isomerisierung von Kohlenwasserstoffen, wobei gleichzeitig eine hohe Beständigkeit gegen Katalysatorgifte, wie beispielsweise CO, Schwefel-, Stickstoff- oder Sauerstoff enthaltende organische Verbindungen erreicht wird.

Es wird angenommen, dass diese thermische Behandlung des metallhaltigen Schichtsilikats zu einer Veränderung der Kristallstruktur führt, die als thermische Verkapselung bezeichnet werden kann.

In besonders bevorzugter Form liegt der Schichtsilikat, auf dessen Basis die metallhaltige Silikatkomponente erzeugt wird, im wesentlichen in H-Form vor.

In einer weiter bevorzugten Ausführungsform ist die metallhaltige Silikatkomponente auf Basis eines Schichtsilikats einer Behandlung mit einer Organosiliciumverbindung unterworfen. Die Behandlung mit einer Organosiliciumverbindung kann vor der Erwärmung des Schichtsilikats zur thermischen Verkapselung, im Anschluss an diese Erwärmung oder gleichzeitig mit dieser vorgenommen werden. Nachfolgend wird diese zusätzliche Verkapselung als chemische Verkapselung bezeichnet.

Es wird angenommen, dass eine solche zusätzliche Behandlung des metallhaltigen, erwärmten Schichtsilikats mit einer Organosiliciumverbindung zu einer weiteren Verkapselung führt, durch die die Zugänglichkeit der metallischen Bestandteile durch Katalysatorgifte weiter beschränkt wird. Denn diese Ausführungsform des erfindungsgemäßen Katalysators weist eine noch verringerte Neigung zur Vergiftung durch Katalysatorgifte, beispielsweise schwefelhaltige Verbindungen, auf. Daher sind erfindungsgemäße Komposit-Katalysatoren für die Hydrierung, Hydroisomerisierung oder beim Hydrospalten von Kohlenwasserstoffen auch in Anwesenheit von Katalysatorgiften geeignet, die die metallhaltige Komponente inaktivieren können, wie beispielsweise organische schwefelhaltige Verbindungen.

Es wird angenommen, dass die thermische und optional die zusätzliche chemische Verkapselung die Zugänglichkeit der Metallkomponente in dem metallhaltigen Schichtsilikat für größere Moleküle beschränkt, wobei die katalytische Aktivität dieses Katalysators bzw. des Katalysatorkomposites mit diesem Katalysator hinsichtlich der Aktivierung molekularen Wasserstoffes erhalten bleibt.

Bei der Beschreibung der Ausführungsformen beziehen sich Angaben zu Materialeigenschaften jeweils nicht nur auf die konkret beschriebene Ausführungsform der Erfmdung, sondern sind auch für die anderen Ausführungsformen der Erfindung anwendbar. Bevorzugtes Einsatzgebiet der erfindungsgemäßen Katalysatoren ist die Umsetzung von Kohlenwasserstoffen in Anwesenheit von molekularem Wasserstoff, die als Hydroisomerisierung, Hydrocracken und/oder als Hydroraffination durchgeführt werden kann. Als Einsatzstoffe für diese Umwandlungsreaktionen können höher siedende Destillatfraktionen von Rohöl und/oder niedrig siedende Destillatfraktionen verwendet werden.

Die in dem Schichtsilikat einzulagernden Metalle sind solche der VIII. Nebengruppe, insbesondere Platin, Palladium und Nickel wobei auch beliebige Mischungen aus den genannten Metallen verwendet werden können . Der Gewichtsanteil des Metalls am metallhaltigen Schichtsilikat beträgt 0,1 bis 25 Gew-%, vorzugsweise 1 bis 20 Gew-% und bevorzugter 5 bis 15 Gew-%. Der maximale Metallgehalt beträgt 100 % des theoretischen Austauschgrades des Schichtsilkats.

Zur chemischen Verkapselung geeignete Verbindungen sind solche Organosiliciumverbindungen, die sich auf den Schichtsilikat abscheiden oder mit dem Schichtsilikat reagieren und diesen silylieren. Eine allgemeine Formel für derartige Verbindungen ist R₁R₂R₃R₄Si, wobei R₁, R₂, R₃ und R₄ voneinander unabhängig eine gradkettige oder verzweigte Alkoxygruppe oder Alkylgruppe mit C₁ bis C₃₀ ist. Ein oder mehr Reste können durch eine Hydroxylgruppe ersetzt sein. Eine besonders bevorzugte Organosiliciumverbindung ist Tetraethoxysilan.

Das verkapselte metallhaltige Schichtsilikat liegt bevorzugt in Mischung mit einem sauren Katalysator auf Basis von Alumosilikaten vor, beispielsweise einem Zeolith, der überwiegend in H-Form ist. Als Zeolith ist beispielsweise Erionit, der überwiegend in der H-Form vorliegt, geeignet, sowie weitere überwiegend saure Zeolithe, die im Stand der Technik für das Hydrocracken, die Hydroisomerisierung und/oder Hydroraffination eingesetzt werden, wie beispielweise H-ZSM-5, H-Pentasil, H-Mordenit, H-Faujasit und Mischungen dieser.

Feststoffe mit sauren Zentren, die in Mischung mit den einer Erwärmung unterworfen metallhaltigen Schichtsilikaten, optional chemisch verkapselt, den Kompositkatalysator der Erfmdung bilden, weisen beispielsweise Lewis- und/oder Brönstedt- saure Zentren auf. In der besonders bevorzugten Ausführungsform sind diese Feststoffe mit sauren Zentren saure Zeolithe, z.B. H-Erionit oder H-ZSM-5.

Weitere geeignete Feststoffe mit sauren Zentren sind Alumosilikate und hier insbesondere Zeolithe, Aluminiumoxid, Silikagel oder mesoporöse Materialien. Es wird angenommen, dass die bifunktionelle Katalyse, die durch die erfindungsgemäßen Katalysatoren vermittelt wird, auf den Spillover-Effekt zurückgeht, der die Aktivierung von molekularem Wasserstoff durch die metallhaltige Komponente und die Übertragung des aktivierten Wasserstoffes auf die Komponente auf Basis von Feststoffen mit sauren Zentren, beispielsweise mit Lewisund/oder Brönsted-sauren Zentren, bevorzugterweise einen saurer Zeolith, beschreibt.

Vorraussetzung für die funktionelle Mischung aus metallhaltigem Schichtsilikat und saurer Komponente bzw. den funktionellen Kontakt zwischen diesen für den Spillover von aktiviertem Wasserstoff ist der physische Kontakt zwischen diesen Katalysatorbestandteilen erforderlich, da der Spillover nicht über die Gasphase erfolgen kann. Zusätzlich muss der saure Festkörper entsprechende elektronische Eigenschaften aufweisen, damit der aktivierte Wasserstoff über die Oberfläche diffundieren kann.

Es ist bevorzugt, dass sowohl der Feststoff mit sauren Zentren überwiegend oder im wesentlichen in H-Form vorliegt und auch der Schichtsilikat überwiegend oder im wesentlichen in H-Form vorliegt.

Das für die erfmdungsgemäßen Katalysatoren geeignete Schichtsilikat, in welches nanodispers Metallpartikel eingebaut sind und das in inniger Mischung mit einem sauren Festkörper vorliegt, ist beispielsweise Ilerit, Kenyait, Magadiit, sowie synthetische oder natürliche Schichtsilikaten mit 001 Orientierung und der allgemeinen Formel Na₂O. xTO₂.yH₂O, wobei x = 1-30, y = 2-10 und T= Si ist und T teilweise auch durch andere Elemente, wie beispielsweise Aluminium, ersetzt sein kann.

In einer besonders bevorzugten Ausführungsformen der Erfindung werden die metallhaltigen Schichtsilikate in eine anorganische Matrix eingebettet und in Mischung mit einem sauren Festkörper als Komposit-Katalysator für eine Umsetzung in einer wasserstoffhaltigen Atmosphäre, beispielsweise für Umwandlungsreaktion von Kohlenwasserstoffen, eingesetzt.

Das Metall, vorzugsweise Palladium und/oder Platin, kann nach im Stand der Technik bekannten Verfahren in das Schichtsilikat eingebaut werden, beispielsweise durch Ionenaustausch des Schichtsilikates mit wässriger [Pt(NH₃)₄]Cl₂ Lösung.. Nach der Imprägnierung mit Platin wird das metallhaltige Schichtsilikat durch Erhitzen an Luft bei 380 °C für 5 Stunden behandelt, um nanodispers verteiltes metallisches Platin in dem Schichtsilikat zu erhalten. Der letzte Schritt kann auch *in situ* vor einer Reaktion durch Behandeln im Luftstrom, Abkühlen im Stickstoffstrom und Reduzieren im Wasserstoffstrom bei erhöhter Temperatur, z.B. oberhalb 300 °C, erfolgen.

Die Temperaturen, die bei der Erzeugung von Metall aus wasserlöslichen metallischen Verbindungen, beispielsweise durch Reduktion von Metallionen zum Metall erforderlich sind, reichen aus, um die Struktur des Schichtsilikats zu verändern. Es wird angenommen, dass die Strukturveränderung durch die thermische Behandlung zu einer Verkapselung der metallischen Komponente innerhalb des Schichtsilikats führt.

Zur Herstellung der zusätzlich zur thermischen Verkapselung auch chemisch verkapselten metallhaltigen Schichtsilikate werden auf einem metallhaltigen Schichtsilikat, beispielsweise Ilerit, Kenyait, Magadiit, synthetischen oder natürlichen Schichtsilikaten mit 001 Orientierung und der allgemeinen Formel Na₂O · xTO₂ ·yH₂O, wobei x = 1-30, y = 2-10 und T= Si, wobei T teilweise auch durch andere Elemente, beispielsweise A1 ersetzt sein kann, Organosiliciumverbindungen abgeschieden.

Zur Verkapselung kann beispielsweise Tetraethoxysilan eingesetzt werden. Tetraethoxysilan kann durch Behandeln des metallhaltigen Schichtsilikates im mit Tetraethoxysilan gesättigten Stickstoffstrom bei 100 °C für 1 Stunde und anschließender Behandlung im Luftstrom bei 500 °C für zwei Stunden abgeschieden werden, um die chemische Verkapselung zu erzielen.

Die erfindungsgemäßen Komposit-Katalysatoren eines metallhaltigen Schichtsilikats, der durch Erwärmen thermisch verkapselt ist, optional anschließend durch beispielsweise Tetraethoxysilan chemisch verkapselt werden besonders bevorzugt in Kombination zusammen mit einem sauren Alumosilikatfestkörper, beispielsweise H-Erionit, für die Umwandlung von Kohlenwasserstoffen eingesetzt. Dabei ergibt sich ein synergetischer Katalyseeffekt des metallhaltigen Schichtsilikates zusammen mit dem sauren Festkörper, beispielsweise H-Erionit, um längerkettige Paraffme und/oder Olefine zu isomerisieren oder zu kürzerkettigen, durch Hydrierung auch zu gesättigten Kohlenwasserstoffen umzusetzen.

Zur Herstellung eines Komposit-Katalysators mit einem Gehalt an verkapseltem metallhaltigem Schichtsilikat und saurem Katalysatorbestandteil lassen sich beliebige bekannte mechanische Mischverfahren einsetzen und nachfolgend das Ausformen von Katalysatorpartikeln zu geeigneten Formen wie Pellets oder Formkörpern, wahlweise mit Zugabe von Bindemittel und/oder weiteren Kalzinierungsschritten oder Oxidations- und Reduktionsschritten, beispielsweise im Sauerstoffstrom und anschließendem Wasserstoffstrom bei erhöhter Temperatur (beispielsweise 300 - 500 °C).

Die erfindungsgemäßen Komposit-Katalysatoren haben nicht nur den Vorteil, dass sie besonders für die Umwandlungsreaktionen von Kohlenwasserstoffen durch Hydroisomerisierung, Hydrocracken und/oder Hydroraffination geeignet sind, sondern sind allgemein gegenüber Wechselwirkungen mit Reaktionskomponenten, die zu einer Desaktivierung führen können, weniger anfällig sind. Dieses führt zu einer erhöhten Gesamtaktivität über den Reaktionsverlauf, bzw. zu längeren Standzeiten bei der industriellen Anwendung. Die erfindungsgemäßen Komposit-Katalysatoren unterliegen beispielsweise in geringerem Ausmaß als herkömmliche Katalysatoren einer Desaktivierung durch Verkokungsprodukte, die bei der Herstellung von Benzinfraktionen aus Erdöldestillaten entstehen. In der bevorzugten Ausführungsform des verkapselten metallhaltigen Schichtsilikates als Bestandteil des Komposit-Katalysators weisen die erfmdungsgemäßen Katalysatoren eine erhöhte Beständigkeit gegenüber der Vergiftung der metallischen Komponente auf, d.h. eine Reduzierung der Verminderung der katalytischen Wasserstoff-Aktivierung durch Katalysatorgifte, wie beispielsweise Kohlenmonoxid, schwefelhaltige oder sauerstoffhaltige Verbindungen.

Für die Hydrierung von Kohlenwasserstoffen wird der erfindungsgemäße Komposit-Katalysator zur Katalyse in einer Atmosphäre mit einem Anteil an Wasserstoff eingesetzt. Für Hydrierungsreaktionen von Kohlenwasserstoffen mit den erfmdungsgemäßen Katalysatoren liegt der Partialdruck des Wasserstoffes im Bereich von 0,1 - 600 bar, bevorzugt 1 - 400 bar, bevorzugter bei 10 - 100 bar, wobei der Bereich von 20 - 50 bar am bevorzugtesten ist.

Zur näheren Erläuterung werden nachfolgend einige Beispiele für die Synthese erfindungsgemäßer Katalysatoren gegeben. Als beispielhafte Reaktion der erfindungsgemäßen Katalysatoren wird die Umsetzung von n-Hexan im Wasserstoffstrom bzw. Stickstoffstrom beschrieben, um die katalytischen Eigenschaften der erfindungsgemäßen Ausführungsformen zu charakterisieren.

Die Produktspektren wurden mittels Massenspektrometrie bestimmt, die Umsetzung von n-Hexan in einem bekannten Versuchsaufbau durchgeführt (F. Rößner et al. (1995) a.a.O.)

### Beispiel 1: Komposit-Katalysator aus metallhaltigem Schichtsilikat mit saurem Zeolith

0,4016 g Pt/Na-Ilerit (ein Schichtsilikat, 2 Gew-% Pt) und 1,5984 g H-Erionit werden in einer Edelstahl-Kugelmühle (ca. 8 cm³ Volumen) zusammen mit zwei Edelstahlkugeln mit einem Durchmesser von ca. 3 mm für 2 h mit Hilfe eines Vibrators intensiv gemischt. Das erhaltene Komposit wird gepresst, gemörsert und zu einer Kornfraktion von 215-315 µm Korngröße gesiebt. Von dieser Kornfraktion werden 0,4980 g *in situ* in einem Laborreaktor (Quarz, 1 cm Innendurchmesser) aktiviert und thermisch verkapselt (Luftstrom für 3 h bei 430 °C, Abkühlen im Stickstoffstrom auf 150 °C für 3 h, Reduktion im Wasserstoffstrom bei 430 °C, Volumenstrom jeweils 50 mL/ min).

Die Umsetzung von n-Hexan erfolgte in einem Wasserstoffstrom von 50 mL/min, einem Massestrom an n-Hexan von 0,8 g/h bei 300 °C. Nach 3 Minuten Reaktionszeit wurden folgende Produktanteile nach Gewicht gefunden: 2,3 % iso-Hexan, 0,8 % Propan, 0,1 % andere Verbindungen und weniger als 0, 1 % n-Butan und n-Pentan.

### Vergleichsbeispiel 1: Katalysator aus saurem, metallhaltigem Zeolith

0,4000 g Pt/H-Erionit (Zeolith, 0,5 Gew-% Pt) werden gepresst, gemörsert und zu einer Fraktion von 215-315 µm Korngröße gesiebt. Die Aktivierung wurde identisch zu Beispiel 1 durchgeführt.

Die Umsetzung von n-Hexan wurde gemäß Beispiel 1 im Wasserstoffstrom gemessen. Dabei wurden folgende Gewichtsanteile im Produkt gefunden: 3,8 % iso-Hexan, 1,3 % Propan und weniger als 0,1 % andere Verbindungen, kein n-Butan und kein n-Pentan.

Beispiel 1 und Vergleichsbeispiel 1 zeigen, dass der erfindungsgemäße Komposit-Katalysator ebenso wie der bekannte metallhaltige Zeolith-Katalysator Pt / H-Erionit für die Isomerisierung von n-Hexan geeignet ist.

### Vergleichsbeispiel 2: Katalysator aus saurem, metallfreiem Zeolith

Analog zu Vergleichsbeispiel 1, allerdings unter Verwendung von 0,4000 g H-Erionit als Katalysator.

Nach dreiminütiger Umsetzung von n-Hexan im Wasserstoffstrom werden 0,4 % Propen, 10,6 % Propan, 9,4 % n-Butan, 3,1 % n-Pentan, 0 % iso-Hexan und 1,1 % andere Verbindungen gefunden.

### Vergleichsbeispiel 3: Katalysator aus neutralem, metallhaltigem Zeolith

Analog zu Vergleichsbeispiel 1, allerdings unter Verwendung von 0,4000 g Pt/Na,K-Erionit als Katalysator.

Nach dreiminütiger Umsetzung von n-Hexan im Stickstoffstrom wurde keine Veränderung der Zusammensetzung des Kohlenwasserstoffes beobachtet.

### Vergleichsbeispiel 4: Komposit-Katalysator aus metallfreiem Schichtsilikat mit saurem Zeolith

Analog zu Beispiel 1, allerdings unter Verwendung von 0,4016 g H-Ilerit und 1,5984 g H-Erionit, wird Katalysator ohne metallische Komponente analog zu dem Verfahren von Beispiel 1 hergestellt.

Dieser Katalysator erzeugte unter den Bedingungen nach Beispiel 1 im Wasserstoffstrom aus Hexan die folgenden Gewichtsanteile im Produktstrom: 0 % iso-Hexan, 5,1 % Propan, 0,4 % Propen, 3,9 % n-Butan, 1,4 % n-Pentan, und 0,8 % andere Verbindungen.

### Vergleichsbeispiel 5: Komposit-Katalysator aus verkapseltem metallhaltigem Schichtsilikat mit neutralem Zeolith

Pt/Na-Ilerit (24 Gew-% Pt) in der Form, wie er synthetisiert wurde, d. h. ohne Erwärmung zur Kalzinierung nach der Synthese, wird in einem Reaktor mit 1,7 cm Durchmesser für 2 Stunden im Stickstoffstrom (100 mL/min) bei 100 °C behandelt. Anschließend wird auf einen bei 21 °C mit Tetraethoxysilan gesättigten Stickstoffstrom umgeschaltet (100 mL/min) und Tetraethoxysilan für 2 h bei 100 °C auf dem Katalysator abgeschieden. Anschließend wird die Temperatur in 40 min auf 500 °C erhöht, der Luftstrom auf 100 mL/min eingestellt und für 2 h gehalten. Im Anschluss an die Kalzinierung wird erneut auf Stickstoffstrom umgeschaltet und die Reaktorheizung abgeschaltet.

Auf diese Weise mit Tetraethoxysilan behandelter Pt/Na-Ilerit (0,0410 g, etwa 24 Gew.-% Platin) und Na,K-Erionit mit (1,9590 g) werden in einer Edelstahlkugelmühle (ca. 18 cm hoch 3 Volumen) zusammen mit zwei Edelstahlkugeln mit einem Durchmesser von ca. 3 mm für 2 h mit Hilfe eines Vibrators intensiv gemischt. Das erhaltene Komposit wird gepresst, gemörsert und zu 200-315 µm Korngröße gesiebt.

Von dieser Kornfraktion werden 0,4 g in situ in einem Laborreaktor (Quarz, 1 cm Innendurchmesser) aktiviert (Luftstrom für 3 h bei 430 °C, Abkühlen im Stickstoffstrom auf 150 °C für 3 h, Reduktion im Wasserstoffstrom bei 430 °C, mit einem Volumenstrom von jeweils 50 mL/min).

Die Behandlung von n-Hexan (0,8 g/h) im Stickstoffstrom (50 mL/min) bei 300 °C zeigte keine Umsetzung.

### Beispiel 2: Komposit-Katalysator aus thermisch und chemisch verkapseltem metallhaltigem Schichtsilikat mit saurem Zeolith

Dieser Katalysator wurde analog zu Vergleichsbeispiel 5 hergestellt, wobei jedoch anstelle des Na,K-Erionits dessen saure Form, H-Erionit, eingesetzt wurde.

Die Behandlung von n-Hexan (0,8 g/h) mit diesem Katalysator im Wasserstoffstrom (50 mL/min) bei 300 °C führte nach drei Minuten zu 1,1 % Propan, 1 % Propan, 4,0 % iso-Hexan und 0 % anderen Kohlenwasserstoffen.

### Beispiel 3: Komposit-Katalysator aus thermisch verkapseltem metallhaltigem Schichtsilikat mit saurem Zeolith

Herstellung eines Katalysators entsprechend Beispiel 2, wobei jedoch keine Behandlung mit Tetraethoxysilan durchgeführt wird. Die metallhaltige Silikatkomponente ist hier thermisch verkapselt, die optionale zusätzliche chemische Verkapselung fehlt jedoch.

Die Umsetzung von n-Hexan entsprechend Beispiel 3 ergab 1,6 % Propan, 0,3 % n-Butan, 0,2 % Propan, 4,9 % iso-Hexan, 0,2 % andere Kohlenwasserstoffe.

Die Beispiele 2 und 3 zeigen, dass auch bei Verkapselung die bifunktionelle katalytische Aktivität erhalten bleibt. Dies wird auf den Spillover-Effekt zurückgeführt.

### Vergleichsbeispiel 6: Komposit-Katalysator aus thermisch und chemisch verkapseltem kalzinierten metallischen Schichtsilikat mit neutralem Zeolith

Herstellung des Komposit-Katalysators entsprechend Beispiel 2, wobei jedoch ein nach der Synthese kalzinierter Pt/Na-Ilerit (2 Gew-% Pt) mit Tetraethoxysilan verkapselt wird und davon 0,4016 g mit 1,5984 g Na,K-Erionit gemischt werden.

Von der Kornfraktion 200-315 µm werden 0,4980 g wie in Beispiel 2 aktiviert und zur Umsetzung von n-Hexan eingesetzt.

Eine Umsetzung von n-Hexan im Stickstoffstrom wurde nicht beobachtet.

Dies wird darauf zurückgeführt, dass anstelle des erfindungsgemäß für den Komposit-Katalysator einzusetzende Feststoff mit sauren Zentren Na, K-Erionit, also ein neutraler Zeolith im Komposit-Katalysator enthalten war.

Dieses Beispiel lässt jedoch darauf schließen, dass die Verkapselung des metallhaltigen Schichtsilikates den Zugang des n-Alkans zu den metallischen Zentren verhindert. Es wird angenommen, dass die Verkapselung zu sterischen Verhältnissen führt, die durch einen ähnlichen Mechanismus eine Inaktivierung des Katalysators durch höhermolekulare Produkte der Umwandlungsreaktion von Kohlenwasserstoffen (Verkokung) zumindest hemmt.

### Beispiel 4: Komposit-Katalysator aus thermisch und chemisch verkapseltem kalzinierten metallischen Schichtsilikat und saurem Zeolith

Herstellung des Komposit-Katalysators entsprechend Vergleichsbeispiel 6, wobei jedoch die H-Form des Erionits anstelle der Na,K-Form eingesetzt wurde.

Für die Umsetzung von n-Hexan wurde ein Wasserstoffstrom verwendet, dem schwefelhaltige Verbindungen, die bei metallhaltigen Zeolithkatalysatoren als Katalysatorgifte wirken, beigesetzt waren.

Es wurden 1,6 % Propan, 0,3 % n-Butan, 0,2 % Propan, 4,9 % iso-Hexan, 0,2 % andere Kohlenwasserstoffe als Reaktionsprodukte nach 3 min gefunden. Die Umsetzung von n-Hexan mit dem gleichen Katalysator im Wasserstoffstrom, dem Kohlenmonoxid zugesetzt war, führte zu etwa dem selben Produktspektrum.

Dieses Beispiel zeigt, dass der erfindungsgemäße Komposit-Katalysator für Isomerisierungsreaktionen von gesättigten Kohlenwasserstoffen eingesetzt werden kann.

Diese Umsetzungen in Anwesenheit von Katalysatorgiften belegen weiterhin, dass thermisch und chemisch verkapseltes metallhaltiges Schichtsilikat als Bestandteil des Komposit-Katalysators dazu führt, einer geringeren Inaktivierung durch Katalysatorgifte unterliegt, die die Reaktivität der metallischen Komponente beeinträchtigen können.

### Beispiel 5: Komposit-Katalysator aus thermisch verkapseltem kalzinierten metallischen Schichtsilikat mit saurem Zeolith

Es wurde ein Kompositkatalysator entsprechend Beispiel 4 hergestellt, jedoch ohne die zusätzliche chemische Verkapselung mit Tetraethoxysilan.

Bei der Umsetzung von n-Hexan entsprechend Beispiel 4 wurde ein Produktstrom mit 1,8 Gew-% n-Hexen mit 100 % Selektivität ohne andere Nebenprodukte gefunden.

### Beispiel 6: Komposit-Katalysator aus thermisch verkapseltem metallischen Schichtsilikat mit saurem Zeolith

Entsprechend Vergleichsbeispiel 5 wurde ein nach der Synthese kalzinierter Pt/Na-Ilerit (2 Gew-% Pt), allerdings ohne zusätzliche chemische Verkapselung mit Tetraethoxysilan und mit H-Erionit anstelle der neutralen Form gemischt.

Bei der Umsetzung von n-Hexan wurde ein Wasserstoffstrom verwendet, dem schwefelhaltige Verbindungen, die bei metallhaltigen Zeolithkatalysatoren als Katalysatorgifte wirken, oder alternativ Kohlenmonoxid beigesetzt waren.

Das Produktspektrum zeigte für beide Verunreinigungen des Trägergases kein iso-Hexan, jedoch die typischen Crackprodukte Propen, Propan, n-Butan und Pentan.

Dieses Beispiel zeigt, dass der erfindungsgemäße Komposit-Katalysator bereits durch die thermische Verkapselung des metallhaltigen Schichtsilikats eine geringere Neigung zur Inaktivierung durch Katalysatorgifte aufweist.

### Beispiel 7: Komposit-Katalysator aus thermisch verkapseltem metallischen Schichtsilikat mit saurem Zeolith zur Umsetzung von Benzol

0,3 g 2.0 Ma-% Pt/Na-Ilerit und 1,2 g H-ZSM-5 (Si/Al = 45) wurden in einer Kugelmühle 2 h innig vermischt. Das Gemisch wurde gepresst, zerkleinert und zu einer Kornfraktion von 200 - 315 µm gesiebt. Von dieser Kornfraktion wurden 1,5 g in einem Laborreaktor aus Edelstahl aktiviert und thermisch verkapselt (3 h Luft bei 430 °C; Abkühlung in Stickstoff auf 150 °C und Reduktion im Wasserstoffstrom bei 430 °C, Volumenstrom jeweils 150 mL/min).

Die Umsetzung von Benzol erfolgte an diesem Katalysatorkomposit bei 300 °C im Wasserstoffstrom (150 mL/min) und einer Benzoldosierung (flüssig) von 0,05 mL/min. Nach 5 min Reaktionszeit wurde ein Umsatz von 50 % gemessen. Die Selektivität für das gebildete Methylcyclopentan betrug 60 Masse-%. Die Selektivität für Cyclohexan betrug 35 Masse-%. Spaltprodukte wurden mit einer Selektivität von 5 Masse-% gebildet.

### Beispiel 8: Komposit-Katalysator aus thermisch verkapseltem metallischen Schichtsilikat mit saurem Zeolith zur Umsetzung von Benzol

Der Komposit-Katalysator wurde entsprechend Beispiel 1 hergestellt, jedoch mit H-Mordenit anstelle des H-Erionits als Feststoff mit sauren Zentren.

Die Umsetzung von Benzol mit diesem Katalysator erfolgte im Wasserstoffstrom bei 360 °C. Als Produkte wurden 5,1 % iso-Hexan, 0,7 % n-Butan, 0,9 % iso-Butan und 3,0 % Propan gefunden.

## Patentansprüche

1. Katalysator mit einem Gehalt an metallhaltiger Silikatkomponente zur Umsetzung von Kohlenwasserstoffen, **dadurch gekennzeichnet, dass** die metallhaltige Silikatkomponente auf einem Schichtsilikat basiert und nach Einbringung des Metalls durch Erwärmung thermisch verkapselt ist und dadurch, dass der Komposit-Katalysator einen sauren Katalysatorbestandteil auf Basis eines Feststoffs mit sauren Zentren enthält.

2. Katalysator nach Anspruch 1, bei dem das Schichtsilikat aus der Gruppe ausgewählt ist, die Ilerit, Kenyait, Magadiit, sowie synthetische oder natürliche Schichtsilikate mit 001 Orientierung und der allgemeinen Formel Na₂O ^{.} xTO₂ ^{.} yH₂O, wobei x = 1-30, y = 2-10 und T= Si ist und T teilweise auch durch andere Elemente ersetzt sein kann, umfasst.

3. Katalysator nach Anspruch 2, **dadurch gekennzeichnet, dass** T ganz oder teilweise durch Aluminium ersetzt ist.

4. Katalysator nach einem der voranstehenden Ansprüche, **dadurch gekennzeichnet, dass** das Metall in dem Schichtsilikat ein Metall der VIII. Nebengruppe, insbesondere Nickel, Platin und/oder Palladium oder eine Mischung aus diesen Metallen ist.

5. Katalysator nach einem der voranstehenden Ansprüche, **dadurch gekennzeichnet, dass** das Schichtsilikat im wesentlichen in H-Form vorliegt.

6. Katalysator nach einem der voranstehenden Ansprüche, **dadurch gekennzeichnet, dass** das Schichtsilikat chemisch verkapselt ist.

7. Katalysator nach Anspruch 6, **dadurch gekennzeichnet, dass** das Schichtsilikat durch Abscheidung einer Organosiliciumverbindung verkapselt ist.

8. Katalysator nach Anspruch 7, **dadurch gekennzeichnet, dass** die Organosiliciumverbindung Tetraethoxysilan oder R₁R₂R₃R₄Si ist, wobei R₁, R₂, R₃ und R₄ voneinander unabhängig eine gradkettige oder verzweigte Alkoxygruppe oder Alkylgruppe mit C₁ bis C₃₀ ist und ein oder mehrere Reste durch Hydroxylgruppen ersetzt sein können.

9. Katalysator nach einem der voranstehenden Ansprüche, **dadurch gekennzeichnet, dass** der Feststoff mit sauren Zentren im wesentlichen in H-Form vorliegt.

10. Katalysator nach einem der voranstehenden Ansprüche, **dadurch gekennzeichnet, dass** der Feststoff mit sauren Zentren Lewis- und/oder Brönsted-saure Gruppen enthält.

11. Katalysator nach einem der voranstehenden Ansprüche, **dadurch gekennzeichnet, dass** der Feststoff mit sauren Zentren ein Zeolith in überwiegend H-Form ist.

12. Katalysator nach einem der voranstehenden Ansprüche, **dadurch gekennzeichnet, dass** der Feststoff mit sauren Zentren Pentasil, Mordenit, Faujasit, β und/oder H-Erionit und/oder mesoporöse Materialien vom Typ MCM oder Mischungen dieser enthält.

13. Verfahren zur Herstellung eines Katalysators nach einem der voranstehenden Ansprüche, **gekennzeichnet durch** die Schritte
a) Einbringen von Metallionen der VIII. Nebengruppe in das Schichtsilikat,
b) Erwärmen des Metallionen enthaltenden Schichtsilikats zur Erzeugung von Metall aus den Metallionen und zur thermischen Verkapselung und
c) Herstellen einer funktionellen Mischung mit einem Feststoff mit sauren Zentren.

14. Verfahren nach Anspruch 13, **dadurch gekennzeichnet, dass** das Metallionen enthaltende Schichtsilikat chemisch verkapselt wird.

15. Verfahren zum Hydrieren, Hydrocracken, Hydroisomerisieren und/oder Hydroraffmieren zumindest teilweise ungesättigter Kohlenwasserstoffe, **dadurch gekennzeichnet, dass** ein Katalysator nach einem der Ansprüche 1 bis 12 eingesetzt wird.

16. Verfahren nach Anspruch 15, **dadurch gekennzeichnet, dass** die teilweise ungesättigten Kohlenwasserstoffe zu klopffestem Benzin mit geringerem Gehalt an aromatischen Kohlenwasserstoffen umgesetzt werden.

17. Verfahren nach Anspruch 15 oder 16, **dadurch gekennzeichnet, dass** die teilweise ungesättigten Kohlenwasserstoffe aromatische Verbindungen enthalten.
